# EUROPÄISCHE PATENTSCHRIFT

(11) **EP 1 798 348 B1**
(45) Veröffentlichungstag und Bekanntmachung des Hinweises auf die Patenterteilung: **12.07.2017**
(21) Anmeldenummer: 06025509.8
(22) Anmeldetag: 09.12.2006
(51) Int. Cl.: E03C 1/04

(54) **Mischbatterie**
Mixer tap
Robinet mélangeur

(30) Priorität: 19.12.2005 DE 102005061032
(43) Veröffentlichungstag der Anmeldung: 20.06.2007
(73) Patentinhaber: Grohe AG, 58675 Hemer (DE)
(72) Erfinder: Begerow, Ralf, 58675 Hemer (DE)

(56) Entgegenhaltungen:
- EP-A2- 1 249 649
- DE-A1- 3 824 418
- DE-A1- 4 308 746
- DE-A1- 19 756 970
- US-A1- 2003 041 907

## Beschreibung

Die Erfindung betrifft eine Mischbatterie mit einem Batteriekörper, an dem ein Wasserauslaufrohr angeordnet ist, wobei
- im Batteriekörper ein Aufnahmeraum für die Aufnahme eines Einsatzstücks vorgesehen ist, in dem eine Mischventilkartusche mit einem Stellhebel angeordnet ist,
- die Mischventilkartusche an der vom Stellhebel abgekehrten Stirnseite Öffnungen für das zufließende Heiß- und Kaltwasser und das abfließende Mischwasser aufweist, die jeweils mit separaten Wasserführungskanälen des Einsatzstückes gedichtet verbunden sind,
- die Wasserführungskanäle für Heiß- und Kaltwasser stromaufwärts gedichtet mit Wasserzuführungen im Batteriekörper verbunden sind,
- der Wasserführungskanal für Mischwasser radial aus dem Einsatzstück in einen wenigstens zum Teil umlaufenden, am Außenmantel von der Wandung
- des Aufnahmeraums begrenzten Ringkanal mündet, der mit dem Wasserauslaufrohr kommuniziert und der axial von wenigstens einer Dichtung zur Wandung des Aufnahmeraums begrenzt ist.

Eine derartige Mischbatterie ist aus der deutschen Offenlegungsschrift DE 197 56 970 A1 bekannt. Hierbei ist das Einsatzstück so bemessen, dass es den Aufnahmeraum im Batteriekörper im Wesentlichen ausfüllt. Für die Wasserzu- und -abführung ist an dem Einsatzstück ein besonderer, im Durchmesser verkleinerter Ansatz angeformt, in dessen Bereich eine Verbindung zum Wasserauslaufrohr vorgesehen ist. Das bekannte Einsatzstück weist somit eine relativ große Länge auf, was insbesondere abträglich ist, wenn das Auslaufrohr mit relativ großem Abstand zum Waschtisch am Batteriekörper ausgebildet werden soll.

Ferner ist aus der DE 43 08 746 A1 eine Mischbatterie gemäß dem Oberbegriff des Anspruchs 1 bekannt. Insbesondere offenbart dieses Dokument eine Einhebelmischbatterie mit auswechselbarer Kartusche für Waschtische und dergleichen Becken von sanitären Einrichtungen bekannt. Diese zeichnet sich dadurch aus, dass die Kartusche in einer Patrone angeordnet ist, die ein die Kartusche aufnehmendes und ihr oberes Ende abdichtend umschließendes Gehäuse bildet, wobei der Patronenboden mit Anschlussbohrung für Anschlussrohre oder -schläuche versehen ist. Dabei fluchten die Anschlussbohrungen mit den Eintrittsöffnungen im Kartuschenboden und sind dicht verbunden, so dass die von oben in das Armaturengehäuse eingesetzte Patrone gegen das Armaturengehäuse abgedichtet ist. Ferner ist die Patrone mit einer in den Auslaufkanal des Armaturengehäuses mündenden Austrittsöffnung versehen, welche die Austrittsöffnung der Kartusche mit dem Auslaufkanal verbindet.

Der Erfindung liegt die Aufgabe zugrunde, die in dem Oberbegriff des Anspruchs 1 angegebene Mischbatterie zu verbessern.

Diese Aufgabe wird bei einem gattungsgemäßen Ventil dadurch gelöst, dass die Mischventilkartusche und das Einsatzstück mit einer Ringschraube 31 gegen den Boden 15 des Batteriekörpers 1a verspannt werden. Weitere Ausgestaltungen der Erfindung sind in den Ansprüchen 2 bis 10 angegeben.

Mit den vorgeschlagenen Maßnahmen wird insbesondere erreicht, dass das als Mischventilkartuschenadapter wirkende Einsatzstück erheblich verkürzt ausgebildet werden kann, wobei das Wasserauslaufrohr am Batteriekörper beliebig hoch angeordnet werden kann.
In weiterer Ausgestaltung der Erfindung kann der Ringkanal zweckmäßig dadurch gebildet werden, dass im Bereich der Dichtung an der Wandung des Einsatzstücks ein radial in Richtung auf das Einsatzstück vorstehender Ringflansch angeformt ist, an dessen Innenwandung in der Stecklage des Einsatzstücks die Dichtung, beispielsweise ein O-Ring, zur dichtenden Anlage gelangt. Die Dichtung kann dabei ebenfalls in einen am Außenmantel des Einsatzstücks angeformten umlaufenden Ringbund in einer am Außenmantel eingelassenen Ringnut angeordnet werden.
Vorteilhaft können in den Wasserzuführungen des Batteriekörpers einsteckbare Rohrleitungen vorgesehen werden, die gedichtet mit dem jeweiligen Wasserzuführungskanal im Einsatzstück verbindbar sind. Hierbei kann an dem Rohr jeweils ein Ringbund, der an dem Rohr durch einen Stauchvorgang gebildet worden ist, als Axialsicherung vorgesehen sein. Alternativ kann in dem Rohr jeweils auch eine umlaufende Ringnut ausgebildet sein, in die in der Stecklage im Batteriekörper ein vom Aufnahmeraum aus jeweils über den Außenmantel des Rohrs überstreifbarer Sprengring einrastbar ist, der nach dem Einrasten in der Ringnut ebenfalls einen Ringbund zur Axialsicherung des Rohrs bildet. Hierbei kann zweckmäßig das Rohr jeweils mit einem Endbereich von einer Einsenkung eines Wasserführungskanals des Einsatzstücks mit einer Dichtung gedichtet aufgenommen werden. Dabei kann die Abdichtung des Raums für den radial erfolgenden Mischwasseraustritt aus dem Einsatzstück in den Ringraum durch eine zweite Dichtung erfolgen, die unterhalb des Ringbunds des jeweiligen Rohrs von einer im Armaturenkörper angeordneten Einsenkung in der Stecklage aufgenommen wird. Alternativ kann auch die Abdichtung am Außenmantel des Einsatzstücks am unteren Bereich erfolgen, wobei dann der radiale Mischwasseraustritt oberhalb der unteren Abdichtung erfolgen kann.
Nach einer weiteren Ausbildung der Erfindung kann auch an dem Einsatzstück konzentrisch zu den beiden Wasserzuführungskanälen für Heiß- und Kaltwasser jeweils ein axial vorstehender rohrförmiger Ansatz angeformt werden, der jeweils in eine entsprechende Einsenkung einer Wasserzuführung einfasst, wobei zwischen der Wandung der Einsenkung und dem Außenmantel des Ansatzes jeweils eine Dichtung zur Abdichtung angeordnet werden kann.
Es hat sich als zweckmäßig erwiesen, die Dicke des Ringkanals auf 1/25 bis 1/10, vorzugsweise 1/15, des Durchmessers des Einsatzstücks vorzusehen. Darüber hinaus kann es bei verschiedenen Mischbatterien auch zweckmäßig sein, anstatt der konzentrischen Anordnung des Einsatzstücks eine exzentrische Anordnung im Aufnahmeraum vorzusehen.

Ausführungsbeispiele der Erfindung sind in der Zeichnung dargestellt und werden im Folgenden näher beschrieben. Es zeigt in der Zeichnung
- Figur 1: eine zum Teil im Schnitt dargestellte Wassermischbatterie;
- Figur 2: einen Ausschnitt II der in Figur 1 gezeigten Mischwasserbatterie in vergrößerter Darstellung;
- Figur 3: das in Figur 1 gezeigte Einsatzstück in Perspektivansicht im Längsschnitt, ohne Mischventilkartusche in vergrößerter Darstellung;
- Figur 4: eine andere Wassermischbatterie, teilweise geschnitten;
- Figur 5: den in Figur 4 gezeigten Ausschnitt V in vergrößerter Darstellung;
- Figur 6: das in Figur 4 gezeigte Einsatzstück in Perspektivansicht im Längsschnitt, ohne Mischventilkartusche in vergrößerter Darstellung;
- Figur 7: eine weitere Wassermischbatterie, teilweise geschnitten;
- Figur 8: den in Figur 7 angegebenen Teil VIII in vergrößerter Darstellung;
- Figur 9: das in Figur 7 gezeigte Einsatzstück in Perspektivansicht im Längsschnitt, ohne Mischventilkartusche in vergrößerter Darstellung.

Der Einfachheit halber sind bei den Ausführungsbeispielen in der Zeichnung gleiche oder entsprechende Elemente mit jeweils gleichen Bezugszeichen versehen. Der Begriff "Richtung" schließt dabei sowohl einen O-Ring, einen Formdichtring als auch eine an einen Körper angespritzte Dichtung ein.

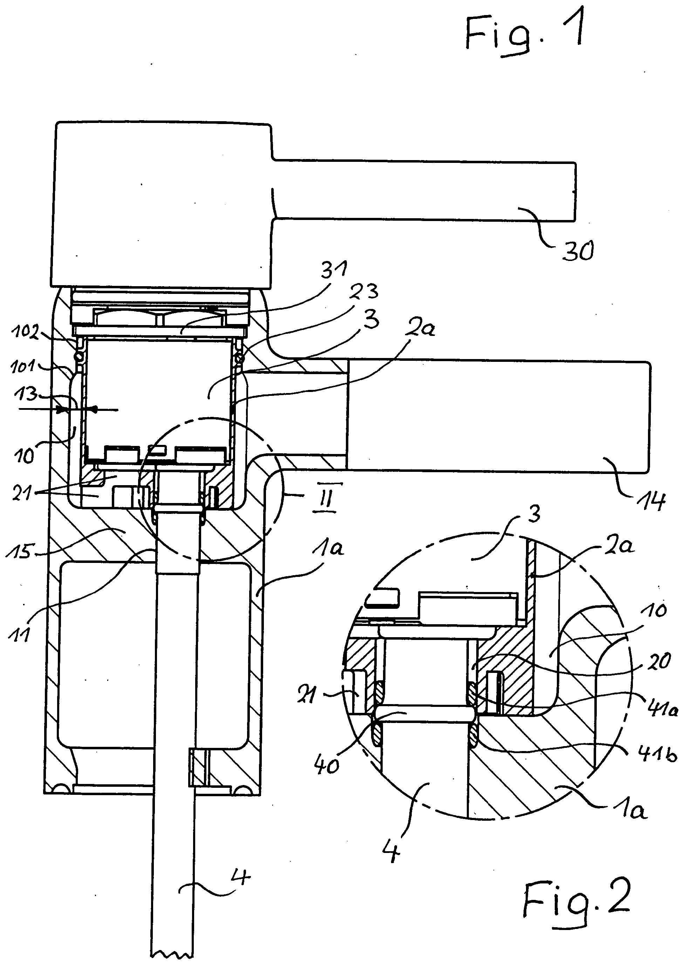

Die in Figur 1 bis Figur 3 der Zeichnung gezeigte Wassermischbatterie weist einen Batteriekörper 1a auf, in dem ein nach oben offener Aufnahmeraum 10 ausgebildet ist. Im Bereich des Aufnahmeraums 10 ist radial seitlich ein Wasserauslaufrohr 14 am Batteriekörper 1a angeformt. Der Aufnahmeraum 10 ist im unteren Bereich von einem Boden 15 begrenzt, in dem separat für das zufließende Kaltwasser und das zufließende Heißwasser jeweils eine Wasserzuführung 11 in Form einer Bohrung vorgesehen ist. Mit Abstand zum Boden 15 weist der Aufnahmeraum 10 einen sich nach innen erstreckenden Ringflansch 101 auf.

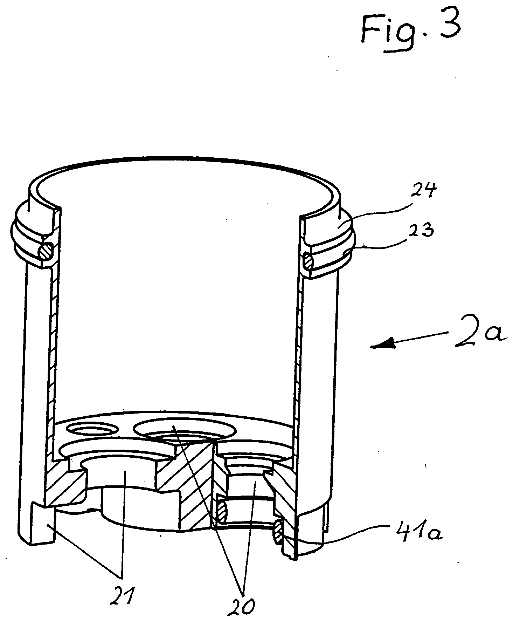

In dem Aufnahmeraum 10 ist ein Einsatzstück 2a in Form eines etwa eine zylindrische Außenwandung aufweisenden Bechers angeordnet. In dem Einsatzstück 2a ist eine bekannte Mischventilkartusche 3 angeordnet, die mit entsprechenden gummielastischen Ringdichtungen umgebenen Öffnungen jeweils mit einem Wasserführungskanal 20 für den Heißwasserzufluss und den Kaltwasserzufluss sowie mit einem Wasserführungskanal 21 für den Mischwasserabfluss gedichtet verbunden ist. Am gegenüberliegenden Endbereich der Mischventilkartusche 3 ist ein Stellhebel 30 angeordnet, mit dem in einem ersten Freiheitsgrad das Mischungsverhältnis des zufließenden Kalt- und Heißwassers sowie in einem zweiten Freiheitsgrad die Gesamtdurchflussmenge einstellbar ist. Der Stellhebel 30 ist dabei in bekannter Weise mit einem Stellglied in der Mischventilkartusche 3 verbunden. An der Außenwandung des Einsatzstücks 2a ist an dem dem Stellhebel 30 zugekehrten Endbereich ein Ringbund 24 angeformt, in dem eine radial nach außen offene Ringnut zur Aufnahme einer als O-Ring geformten Dichtung 23 ausgebildet ist, wie es insbesondere aus Figur 1 und Figur 3 der Zeichnung zu entnehmen ist. In der Einsatzposition im Aufnahmeraum 10 liegt die Dichtung 23 dichtend an einer Innenwandung 102 des Ringflansches 101 an.

Vor dem Einbau des Einsatzes 2a wird von der Seite des Aufnahmeraums 10 aus in die Wasserzuführungen 11 des Bodens 15 für das zufließende Kalt- und Heißwasser jeweils eine Rohrleitung 4 eingeschoben. Das Rohr 4 weist am Endbereich am Außenmantel einen z.B. durch Stauchung erzeugten umlaufenden Ringbund 40 auf. An der einen Stirnseite des Ringbunds 40 ist eine Dichtung 41b und an der anderen Stirnseite eine Dichtung 41a angeordnet. Beim Einschieben der beiden Rohrleitungen 4 - in Figur 1 der Zeichnung ist lediglich eine Rohrleitung gezeigt - gelangt die Dichtung 41b jeweils in eine Aussenkung der Wasserzuführung 11 im Boden 15 zur dichtenden Anlage am Außenmantel der Rohrleitung 4 und der Wandung der Einsenkung im Boden 15, wie es insbesondere aus Figur 2 der Zeichnung zu entnehmen ist. Auf die beiden in den Wasserzuführungen 11 angeordneten Rohrleitungen 4, die axial durch den Ringbund 40 in der Stecklage gesichert sind, wird anschließend das Einsatzstück 2a aufgesteckt, wobei die Dichtung 41a jeweils an der Wandung des Wasserzuführungskanals 20 und dem Außenmantel der Rohrleitung 4 dichtend zur Anlage gelangt. Sodann kann die Mischventilkartusche 3 mit ihren gummielastischen Ringdichtungen in den Einsatz 2a eingesetzt werden, wonach abschließend mit einer Ringschraube 31 die Mischventilkartusche 3 und das Einsatzstück 2a gegen den Boden 15 des Batteriekörpers 1a verspannt werden können. Selbstverständlich kann auch zunächst die Mischventilkartusche 3 in das Einsatzstück 2a eingesetzt werden und dann die gesamte Einheit in den Aufnahmeraum 10 eingebracht und mit der Ringschraube 31 in der Stecklage gesichert werden. Nach dem Anmontieren des Stellhebels 30 an die Mischventilkartusche 3 ist dann die Mischbatterie komplettiert.
Zur Installation kann dann die Wassermischbatterie mit dem Batteriekörper 1a an einem in der Zeichnung nicht dargestellten Waschtisch montiert werden, wobei dann die Rohrleitungen 4 mit dem Kaltwasser- und dem Heißwasserversorgungsleitungsnetz zu verbinden sind. Wird danach mit dem Stellhebel 30 die Mischventilkartusche 3 geöffnet, so wird das über die Rohrleitungen 4 zuströmende Kalt- und Heißwasser in der Mischventilkartusche 3 gemischt und über den Wasserführungskanal 21 für den Wasserabfluss radial in den Ringkanal zwischen der Wandung des Aufnahmeraums 10 und dem Außenmantel des Einsatzstücks 2a sowie mit der Dichtung 23 abgegeben. Von dem Ringraum strömt das Wasser danach in das Wasserauslaufrohr 14, wo es aus einem - in der Zeichnung nicht gezeigten - Wasserauslaufmundstück als Freistrahl austritt.

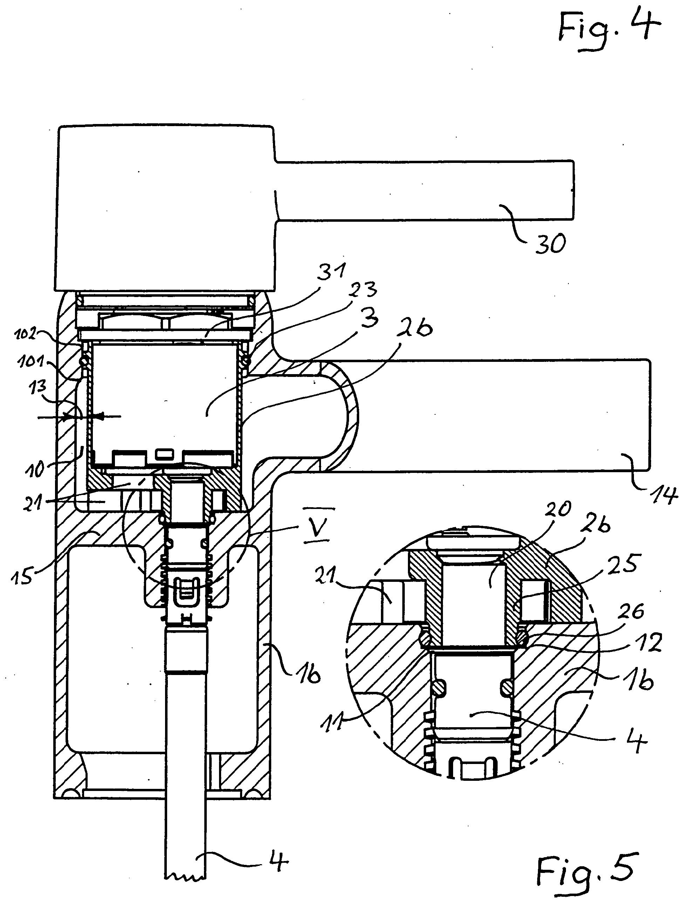

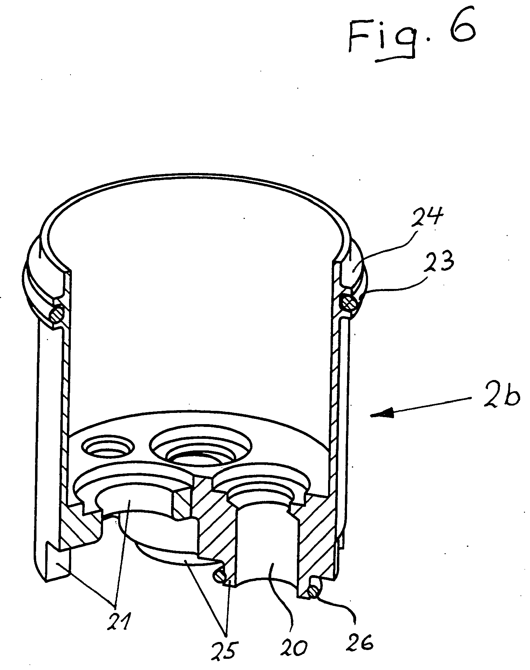

In dem Ausführungsbeispiel gemäß Figur 4 bis Figur 6 der Zeichnung ist eine modifizierte Mischbatterie dargestellt, die sich zu dem vorbeschriebenen Ausführungsbeispiel im wesentlichen lediglich dadurch unterscheidet, dass im Boden 15 des Batteriekörpers 1b die Wasserzuführungen 11 so ausgebildet sind, dass jeweils die Rohrleitung 4 mit einer bekannten Steckverbindung, die in die Wasserzuführung 11 gedichtet einbringbar ist, angeschlossen werden kann. Außerdem ist ein Einsatzstück 2b vorgesehen, dessen Wasserführungskanäle 20 stromaufwärts konzentrisch jeweils einen rohrförmigen Ansatz 25 tragen , der in der Stecklage jeweils in eine Aussenkung 12 im Boden 15 des Batteriekörpers 1b einfasst. Zur Abdichtung ist auf der Außenwandung des Ansatzes 25 jeweils eine Dichtung 26 angeordnet, der in der Stecklage dichtend an der Wandung der Einsenkung 12 zur Anlage gelangt, wie es insbesondere aus Figur 5 der Zeichnung zu entnehmen ist. Mit den beiden Dichtungen 26 wird somit sowohl jeweils der Zuflussraum für Kalt- und Heißwasser als auch der Mischwasserraum zum Batteriekörper 1b abgedichtet. Im übrigen entspricht diese Mischbatterie der ersten Ausführungsform.

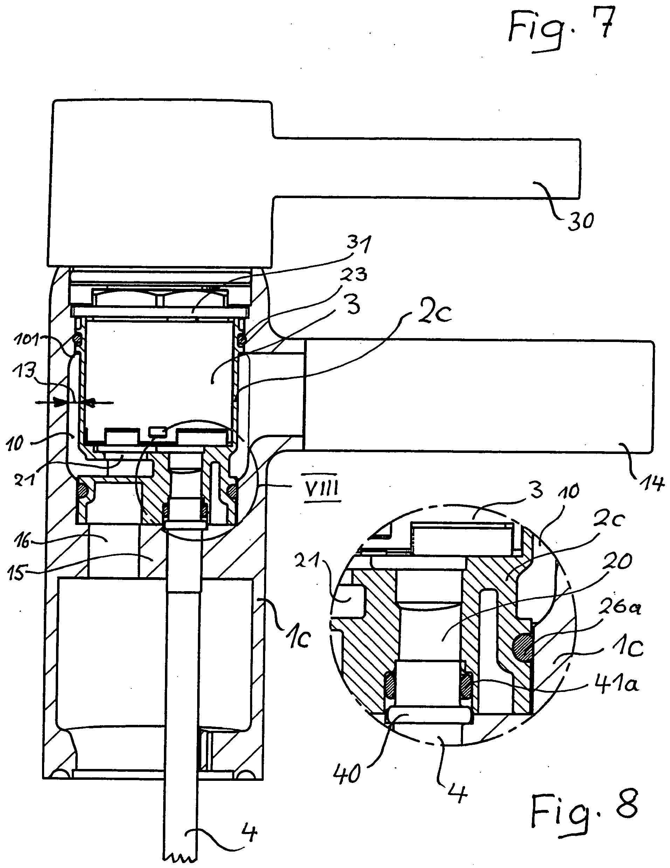

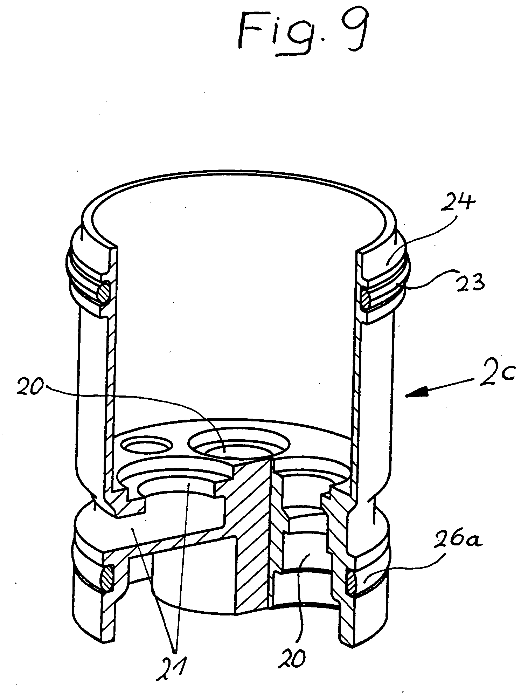

In Figur 7 bis 9 der Zeichnung ist eine weitere Variante einer Mischbatterie dargestellt, die sich zu der in Figur 1 bis 3 dargestellten Ausführungsform im Wesentlichen dadurch unterscheidet, dass die dort mit 41b bezeichnete Dichtung entfällt. Stattdessen ist in der Nähe des Bodens 15 des Batteriekörpers 1c am zylindrischen Außenmantel des Einsatzstücks 2c eine weitere Dichtung 26a in einer Ringnut angeordnet, der in der Stecklage an der Wandung des Aufnahmeraums 10 dichtend zur Anlage gelangt. Bei dieser Ausbildung kann der Boden 15 einen relativ großen Durchbruch 16 für einen Gießkern aufweisen, wodurch der Gießprozess zur Herstellung des Batteriekörpers 1c erheblich vereinfacht werden kann.

In den vorstehend aufgeführten drei Ausführungsbeispielen ist der Ringkanal begrenzt durch den zylindrischen Außenmantel des Einsatzstücks 2a, 2b, 2c und der Wandung des Aufnahmeraums 10 des Batteriekörpers 1a, 1b, 1c. Der Ringkanal ist dabei mit einer Dicke 13 von etwa 1/15 des Durchmessers des zylindrischen Außenmantels des Einsatzstücks 2a, 2b, 2c versehen. Das in der Mischventilkartusche 3 erzeugte Mischwasser oder das durchströmende Kalt- oder Heißwasser kann somit in dem Ringkanal relativ weit nach oben bis in die Nähe der Ringschraube 31 hoch steigen, wodurch ein relativ hoch am Batteriekörper 1a, 1b, 1c angeordnetes Wasserauslaufrohr 14 möglich ist, so dass eine erheblich größere Freiheit bei der Gestaltung des Batteriekörpers 1a, 1b, 1c geboten werden kann.

## Patentansprüche

1. Mischbatterie mit einem Batteriekörper (1a, 1b, 1c), an dem ein Wasserauslaufrohr (14) angeordnet ist, wobei
- im Batteriekörper (1a, 1b, 1c) ein Aufnahmeraum (10) für die Aufnahme eines Einsatzstücks (2a,2b,2c) vorgesehen ist, in dem eine Mischventilkartusche (3) mit einem Stellhebel (30) angeordnet ist,
- die Mischventilkartusche (3) an der vom Stellhebel (30) abgekehrten Stirnseite Öffnungen für das zufließende Heiß- und Kaltwasser und das abfließende Mischwasser aufweist, die jeweils mit separaten Wasserführungskanälen (20,21) des Einsatzstückes (2a,2b,2c) gedichtet verbunden sind,
- die Wasserführungskanäle (20,21) für Heiß- und Kaltwasser stromaufwärts gedichtet mit Wasserzuführungen (11) im Batteriekörper (1a, 1b, 1c) verbunden sind,
- der Wasserführungskanal für Mischwasser radial aus dem Einsatzstück (2a,2b,2c) in einen wenigstens zum Teil umlaufenden, am Außenmantel von der Wandung des Aufnahmeraums (10) begrenzten Ringkanal mündet, der mit dem Wasserauslaufrohr (14) kommuniziert und der axial von wenigstens einer Dichtung (23) zur Wandung des Aufnahmeraums (10) begrenzt ist,
wobei die eine Dichtung (23) zur Begrenzung des Ringkanals an dem von den Zuführungskanälen (21) abgekehrten Endbereich des Einsatzstücks (2a, 2b, 2c) angeordnet ist, wobei der Einsatz (2a, 2b, 2c) becherförmig mit einer zylindrischen Außenwandung ausgebildet und der Aufnahmeraum (10) im Durchmesser größer als der Außendurchmesser des Einsatzstücks (2a, 2b, 2c) ist, so dass von der Wandung des Aufnahmeraums (10) und der Außenwandung des Einsatzstücks (2a, 2b, 2c) der Ringkanal radial begrenzt wird, **dadurch gekennzeichnet dass** die Mischventilkartusche (3) und das Einsatzstück (2a) mit einer Ringschraube (31) gegen den Boden (15) des Batteriekörpers (1a) verspannt werden.

2. Mischbatterie nach Anspruch 1, **dadurch gekennzeichnet, dass** wenigstens im Bereich der Dichtung (23) ein radial in Richtung auf das Einsatzstück (2a, 2b, 2c) vorstehender Ringflansch (101) an der Wandung angeformt ist, an dessen zylindrischer Innenwandung (102) die Dichtung (23) dichtend zur Anlage gelangt.

3. Mischbatterie nach Anspruch 1 oder 2 , **dadurch gekennzeichnet, dass** am Außenmantel des Einsatzstücks (2a, 2b, 2c) ein umlaufender Ringbund (24) ausgebildet ist, an dessen Außenmantelfläche eine Ringnut für die Aufnahme der Dichtung (23) eingelassen ist.

4. Mischbatterie nach wenigstens einem der vorhergehenden Ansprüche, **dadurch gekennzeichnet, dass** stromaufwärts an dem Einsatzstück (2b) konzentrisch zu den beiden Wasserführungskanälen (20) für Heiß- und Kaltwasser je ein rohrförmiger Ansatz (25) angeformt ist, der in der Stecklage in eine Einsenkung (12) einer Wasserzuführung (11) im Batteriekörper (1) einfasst, wobei die Einsenkung jeweils so dimensioniert ist, dass zwischen der Außenwandung des Ansatzes (25) und der Wandung der Einsenkung (12) zur Abdichtung wenigstens eine Dichtung (26) anordbar ist.

5. Mischbatterie nach wenigstens einem der vorhergehenden Ansprüche, **dadurch gekennzeichnet, dass** in der Wasserzuführung (11) im Batteriekörper (1a) je eine Rohrleitung (4) angeordnet ist, wobei jede Rohrleitung (4) am Endbereich am Außenmantel einen radial vorstehenden Ringbund (40) aufweist, an dessen beiden Stirnseiten je eine Dichtung (41a, 41b) vorgesehen ist, wobei am Übergang vom Batteriekörper (1a) zum Einsatzstück (2a) im Wasserführungskanal (20) und in der Wasserzuführung (11) jeweils eine Einsenkung ausgebildet ist, derart, dass in der Stecklage eine erste Dichtung (41b) eine Abdichtung zwischen der Wandung der Rohrleitung (4) und dem Batteriekörper (1a) und eine zweite Dichtung (41a) eine Abdichtung zwischen der Wandung der Rohrleitung (4) und dem Einsatzstück (2a) herstellt.

6. Mischbatterie nach Anspruch 5, **dadurch gekennzeichnet, dass** der Ringbund (40) durch einen Stauchvorgang einstückig an der Rohrleitung hergestellt ist.

7. Mischbatterie nach Anspruch 5, **dadurch gekennzeichnet, dass** im Außenmantel der Rohrleitung eine umlaufende Ringnut ausgebildet ist, in die als Ringbund ein Sprengring einsprengbar ist.

8. Mischbatterie nach wenigstens einem der vorhergehenden Ansprüche, **dadurch gekennzeichnet, dass** der Ringkanal eine Dicke (13) von 1/25 bis 1/10 des Durchmessers des Einsatzstücks (2a, 2b, 2c) aufweist.

9. Mischbatterie nach Anspruch 8, **dadurch gekennzeichnet, dass** die Dicke (13) 1/15 des Durchmessers des Einsatzstücks (2a, 2b, 2c) beträgt.

10. Mischbatterie nach wenigstens einem der vorhergehenden Ansprüche, **dadurch gekennzeichnet, dass** das Einsatzstück exzentrisch im Aufnahmeraum angeordnet ist.

## Claims

1. Mixer tap having a tap body (1 a, 1 b, 1 c) on which a water outlet pipe (14) is arranged, wherein
- in the tap body (1 a, 1 b, 1 c) there is provided a receiving space (10) for receiving an insert piece (2a, 2b, 2c), in which a mixer valve cartridge (3) having a control lever (30) is arranged,
- the mixer valve cartridge (3) has on its end face remote from the control lever (30) openings for the inflowing hot and cold water and the outflowing mixed water, which openings are sealingly connected to respective separate water guide channels (20, 21) of the insert piece (2a, 2b, 2c),
- the water guide channels (20, 21) for hot and cold water are sealingly connected upstream to water inlets (11) in the tap body (1 a, 1 b, 1 c),
- the water guide channel for mixed water leads radially out of the insert piece (2a, 2b, 2c) into an annular channel which runs at least partway around the periphery and is delimited at its curved outer surface by the wall of the receiving space (10), which annular channel communicates with the water outlet pipe (14) and is delimited axially with respect to the wall of the receiving space (10) by at least one seal (23),
wherein the one seal (23) for delimiting the annular channel is arranged at the end region of the insert piece (2a, 2b, 2c) remote from the inflow channels (21), the insert (2a, 2b, 2c) being of beaker-like form with a cylindrical outer wall, and the diameter of the receiving space (10) being larger than the outer diameter of the insert piece (2a, 2b, 2c), so that the annular channel is delimited radially by the wall of the receiving space (10) and the outer wall of the insert piece (2a, 2b, 2c),
**characterised in that**
the mixer valve cartridge (3) and the insert piece (2a) are clamped against the base (15) of the tap body (1 a) by a threaded ring (31).

2. Mixer tap according to claim 1, **characterised in that** at least in the region of the seal (23) there is formed integrally with the wall an annular flange (101) which projects radially in a direction towards the insert piece (2a, 2b, 2c) and against the cylindrical inner wall (102) of which the seal (23) makes sealing contact.

3. Mixer tap according to claim 1 or 2, **characterised in that** on the curved outer surface of the insert piece (2a, 2b, 2c) there is formed a peripheral annular collar (24), in the curved outer face of which there is provided an annular groove for receiving the seal (23).

4. Mixer tap according to at least one of the preceding claims, **characterised in that** upstream there is formed integrally with the insert piece (2b), concentrically with respect to each of the two water guide channels (20) for hot and cold water, a tubular neck (25) which, in the inserted position, fits into a counterbore (12) of a water inlet (11) in the tap body (1), wherein the counterbore is in each case dimensioned so that, for sealing, at least one seal (26) can be arranged between the outer wall of the neck (25) and the wall of the counterbore (12).

5. Mixer tap according to at least one of the preceding claims, **characterised in that** a conduit pipe (4) is arranged in each water inlet (11) in the tap body (1 a), each conduit pipe (4) having in the end region on its curved outer surface a radially projecting annular collar (40), on each of the two end faces of which there is provided a seal (41 a, 41 b), a counterbore being formed at the transition from the tap body (1 a) to the insert piece (2a) in the water guide channel (20) and in the water supply (11) in such a way that, in the inserted position, a first seal (41 b) creates a seal between the wall of the conduit pipe (4) and the tap body (1 a) and a second seal (41 a) creates a seal between the wall of the conduit pipe (4) and the insert piece (2a).

6. Mixer tap according to claim 5, **characterised in that** the annular collar (40) has been made in one piece with the conduit pipe by means of an upsetting operation.

7. Mixer tap according to claim 5, **characterised in that** there is formed in the curved outer surface of the conduit pipe a peripheral annular groove, into which a snap ring can be snapped as annular collar.

8. Mixer tap according to at least one of the preceding claims, **characterised in that** the annular channel has a thickness (13) of from 1/25 to 1/10 of the diameter of the insert piece (2a, 2b, 2c).

9. Mixer tap according to claim 8, **characterised in that** the thickness (13) is 1/15 of the diameter of the insert piece (2a, 2b, 2c).

10. Mixer tap according to at least one of the preceding claims, **characterised in that** the insert piece is arranged eccentrically in the receiving space.

## Revendications

1. Mitigeur comportant un corps (1a, 1b, 1c) muni d'un bec (14),
- le corps de mitigeur (1a, 1b, 1c) ayant un logement (10) recevant un insert (2a, 2b, 2c) logeant une cartouche de mitigeur (3) avec une manette (30),
- le côté de la cartouche (3) à l'opposé de celui de la manette (30) comporte des orifices pour l'entrée d'eau chaude et d'eau froide et la sortie de l'eau mélangée, qui sont chacun reliés de manière étanche à des canaux de passage d'eau (20, 21), distincts, de l'insert (2a, 2b, 2c),
- les canaux de passage d'eau (20, 21) pour l'eau chaude et l'eau froide étant reliés de manière étanche en amont aux arrivées d'eau (11) dans le corps de mitigeur (1a, 1b, 1c),
- le canal de passage de l'eau mélangée débouchant radialement de l'insert (2a, 2b, 2c) dans un canal annulaire est au moins en partie périphérique délimité par la paroi du logement (10), communique avec le bec (14), et il est délimité axialement par rapport à la paroi du logement (10) par au moins un joint (23),
un joint (23) étant prévu pour délimiter le canal annulaire dans la zone d'extrémité de l'insert (2a, 2b, 2c) à l'opposé de celle des canaux d'alimentation (21), l'insert (2a, 2b, 2c) ayant une forme de gobelet à paroi extérieure cylindrique et le logement (10) à un diamètre plus grand que celui de l'insert (2a, 2b, 2c) de sorte que la paroi du logement (10) et la paroi extérieure de l'insert (2a, 2b, 2c) délimitent radialement le canal annulaire,
mitigeur **caractérisé en ce que**
la cartouche de mitigeur (3) et l'insert (2a) sont serrés par un écrou annulaire (31) contre le fond (15) du corps (1a) du mitigeur.

2. Mitigeur selon la revendication 1,
**caractérisé en ce qu'**
au moins dans la région du joint (23), la paroi a une bride annulaire (101) venant radialement en saillie en direction de l'insert (2a, 2b, 2c), et le joint (23) vient en appui étanche contre la paroi cylindrique intérieure (102) de la bride annulaire.

3. Mitigeur selon la revendication 1 ou 2,
**caractérisé en ce que**
l'enveloppe extérieure de l'insert (2a, 2b, 2c) a un collet annulaire (24) périphérique dont la surface-enveloppe extérieure comporte une gorge annulaire pour recevoir le joint (23).

4. Mitigeur selon au moins l'une des revendications précédentes,
**caractérisé en ce qu'**
en amont de l'insert (2b), concentriquement aux deux canaux d'eau (20, 21) pour l'eau chaude et l'eau froide, il est prévu chaque fois un prolongement tubulaire (25) qui, en position enfoncée, vient dans un lamage (12) du passage d'eau (11) dans le corps de mitigeur (1), le lamage étant dimensionné pour recevoir au moins un joint (26) entre la paroi extérieure du prolongement (25) et la paroi du lamage (12) pour réaliser l'étanchéité.

5. Mitigeur selon au moins l'une des revendications précédentes,
**caractérisé en ce que**
chaque passage d'eau (11) du corps de mitigeur (1a), reçoit une conduite (4), ayant chacune à son extrémité de l'enveloppe extérieure, un collet (40) venant radialement en saillie, et les deux faces frontales comportent chacune un joint (41a, 41b), le passage entre le corps de mitigeur (1a) et l'insert (2a) dans le canal d'eau (20) et dans le canal d'eau (11) ayant chaque fois un enfoncement tel qu'en position enfoncée, le premier joint (41b) réalise l'étanchéité entre la paroi de la conduite (4) et le corps de mitigeur (1a) et le second joint (41a) réalise l'étanchéité entre la paroi de la conduite (4) et l'insert (2a).

6. Mitigeur selon la revendication 5,
**caractérisé en ce que**
le collet annulaire (40) est réalisé en une seule pièce dans la conduite par une opération de compression.

7. Mitigeur selon la revendication 5,
**caractérisé en ce que**
l'enveloppe extérieure de la conduite a une rainure annulaire périphérique dans laquelle s'accroche élastiquement le collet annulaire formant un anneau élastique.

8. Mitigeur selon au moins l'une des revendications précédentes,
**caractérisé en ce que**
le canal annulaire a une épaisseur (13) comprise entre 1/25 et 1/10 du diamètre de l'insert (2a, 2b, 2c).

9. Mitigeur selon la revendication 8,
**caractérisé en ce que**
l'épaisseur (13) est égale à un 1/15 du diamètre de l'insert (2a, 2b, 2c).

10. Mitigeur selon au moins l'une des revendications précédentes,
**caractérisé en ce que**
l'insert est installé de façon excentrée dans le logement.
